# EUROPÄISCHE PATENTSCHRIFT

(11) **EP 1 167 172 B1**
(45) Veröffentlichungstag und Bekanntmachung des Hinweises auf die Patenterteilung: **06.09.2006**
(21) Anmeldenummer: 01115858.1
(22) Anmeldetag: 28.06.2001
(51) Int. Cl.: B62K 19/16, B62K 19/02

(54) **Fahrradrahmen**
Bicycle frame
Cadre de bicyclette

(30) Priorität: 28.06.2000 DE 20011358 U
(43) Veröffentlichungstag der Anmeldung: 02.01.2002
(73) Patentinhaber: Storck Bicycle GmbH, 65520 Bad Camberg (DE)
(72) Erfinder: Storck, Markus, 65520 Bad Camberg (DE); Mertin, Thomas, 24791 Alt Duvenstadt (DE)
(74) Vertreter: Wallinger, Michael

(56) Entgegenhaltungen:
- DE-A- 3 812 510
- DE-A- 19 640 955
- DE-U- 8 914 315
- GB-A- 1 281 731
- NL-C- 1 009 665
- US-A- 4 513 986
- US-A- 5 059 057
- US-A- 5 221 102
- US-A- 5 451 071
- US-A- 5 456 481
- US-A- 5 842 711
- US-A- 6 017 048

## Beschreibung

Die Erfindung betrifft einen Fahrradrahmen.

Bekannte Fahrradrahmen sind als Rohrkonstruktion gestaltet und bestehen aus einem Metall, wie Stahl oder Aluminium, oder aus einem Verbundwerkstoff.

Diese bekannten Rohrkonstruktionen weisen Außenwandungen auf sowie Innenwandungen, welche einen Rohrinnenraum begrenzen. Die Querschnittsflächen der Rohrwandungen sind auf unterschiedliche Weise gestaltet und werden beispielsweise von Kreisen, Rechtecken, Ellipsen oder sonstigen Formen begrenzt.

Aus der US 5,457,071 ist ein Monocoque-Rahmen für ein Fahrrad gemäß dem Oberbegriff von Anspruch 1 bekannt, dessen Teile Längsholme sowie seitlich verlaufende Rippen aufweisen, die mit der Haut verbunden sind, wie es im Zusammenhang mit Fig. 12 der US 5,457,071 erläutert ist.

Aus der US 6,017,048 ist ein Fahrradrahmen bekannt, bei dem im Sitzrohr I-förmige und X-förmige Streben eingebracht sind, um eine nach außen gerichtete Durchbiegung der Seitenwände bei vertikaler Belastung zu verhindern (vgl. Fig. 5B der US 6,017,048).

Der Erfindung liegt die Aufgabe zugrunde, einen anders gestalteten Fahrradrahmen zu schaffen.

Gemäß einem besonderen Aspekt liegt der Erfindung die Aufgabe zugrunde, einen Fahrradrahmen mit verbesserter Stabilität zu schaffen.

Die Aufgabe wird gelöst durch einen Fahrradrahmen gemäß Anspruch 1.

Bevorzugte Weiterbildungen der Erfindung sind Gegenstand der Unteransprüche.

Erfindungsgemäß ist insbesondere ein Fahrradrahmen vorgesehen, welcher zumindest teilweise als Rohrkonstruktion gestaltet ist und mehrere Rohrabschnitte aufweist, wobei diese Rohrabschnitte Außenwandungsbereiche und einen von Innenwandungsbereichen begrenzten Rohrinnenraum aufweisen und wobei in wenigstens einem Bereich dieses Rohrinnenraums wenigstens eine Spanteinrichtung vorgesehen ist. Diese Spanteinrichtung stützt sich an wenigstens einer Stelle an der Rohrinnenwandung ab.

Die Anordnung der Rahmenrohre kann auf unterschiedliche Weise gestaltet sein.

Im folgenden werden einige bevorzugte Ausführungsformen einer derartigen Fahrradrahmenkonstruktion beschrieben, ohne daß die Erfindung auf diese Fahrradrahmenkonstruktionen beschränkt sein soll:

Der Fahrradrahmen weist vorzugsweise ein Steuerrohr, ein oder mehrere Oberrohre, eine Tretlageraufnahme, ein Sitzrohr, eine Kettenstrebe sowie eine Sattelstrebe auf.

Der Hinterbau, insbesondere der Bereich des Fahrradrahmens, welche die Kettenstrebe und gegebenenfalls die Sattelstrebe aufweist, kann an dem restlichen Fahrradrahmen angelenkt sein oder fest mit diesem verbunden sein.

Im Steuerrohr können eine Lenkstange sowie der Schaft einer Fahrradgabel aufgenommen werden und am Steuerrohr sind insbesondere das oder die Oberrohre befestigt. Vorzugsweise ist ein Oberrohr zwischen dem Steuerrohr und der Tretlageraufnahme angeordnet. Bevorzugt ist ferner, daß ein Oberrohr eine Verbindung zwischen dem Steuerrohr und dem Sitzrohr bildet. Unterschiedliche Oberrohre können höhenversetzt oder auf gleicher Höhe angeordnet sein. Vorzugsweise ist ein oberes Oberrohr zwischen dem Steuerrohr und dem oberen Bereich des Sitzrohres angeordnet ist. Bevorzugt ist ferner, daß sich ein Oberrohr vom Steuerrohr zu einem Bereich des Sitzrohres erstreckt, welcher zwischen den beidseitigen Enden dieses Rohres angeordnet ist.

Das Sitzrohr dient insbesondere der Aufnahme einer Sattelstange und erstreckt sich vorzugsweise zur Tretlageraufnahme oder zu einem zwischen den Endbereichen eines Oberrohres angeordneten Bereich dieses Oberrohres.

Die jeweiligen Rohre des Fahrradrahmens können gradlinig oder nicht-geradlinig gestaltet sein. Nicht-gradlinig gestaltete Rohre sind abgewinkelt oder gekrümmt oder auf sonstige Weise gestaltet.

Eine Vielzahl weiterer Gestaltungsmöglichkeiten der Außenkontur eines erfindungsgemäßen Fahrradrahmens sind bevorzugt.

Die nach der Erfindung verwendete Spanteinrichtung kann auf unterschiedlichste Weise gestaltet sein. Im folgenden werden einige beispielhafte Geometrien einer erfindungsgemäßen Spanteinrichtung bzw. von Bereichen einer erfindungsgemäßen Spanteinrichtung beschrieben, welche allerdings die Erfindung nicht auf diese Geometrien beschränken sollen:

Eine erfindungsgemäße Spanteinrichtung weist vorzugsweise einen Bereich mit einem mehreckigen, insbesondere drei- oder viereckigen, oder runden oder ellipsenförmigen oder kreisringförmigen oder sternförmigen oder auf sonstige Weise gestalteten Querschnitt auf. Besonders bevorzugt sind in einem vorbestimmten Bereich der Spanteinrichtung Aussparungen in der Querschnittsfläche vorgesehen. Besonders bevorzugt ist die Spanteinrichtung länglich gestaltet oder weist ein oder mehrere sich länglich erstreckende Bereiche auf. Die Spanteinrichtung weist gegebenenfalls Bereiche auf, welche, insbesondere entlang der Längsachse dieser Bereiche, abgerundet oder geknickt, gegebenenfalls mehrfach abgeknickt, gestaltet sind. Besonders bevorzugt weist die Spanteinrichtung Bereiche mit einer Querschnittsfläche auf, deren Höhe gering im Vergleich zur Breite ist. Die Spanteinrichtung weist hinsichtlich ihrer Form und/oder Größe unterschiedlich gestaltete oder gleich gestaltete Querschnittsflächen auf. Besonders bevorzugt ist die Spanteinrichtung fachwerkartig gestaltet. Vorzugsweise weist die Spanteinrichtung mehrere Spante auf, welche gegebenenfalls miteinander in Kontakt stehen.

Vorzugsweise weist die Spanteinrichtung mehrere Einzelspante auf, welche einander nicht kontaktieren

Bevorzugt weist die nach der Erfindung verwendete Spanteinrichtung Bereiche auf, welche an die Rohrinnenkontur des Rohrbereiches angepaßt sind, in welchem diese Spanteinrichtung angeordnet ist.

Gemäß einer bevorzugten Ausführungsform der Erfindung weist die Spanteinrichtung mehrere Spante auf, welche unter einem Winkel zueinander angeordnet sind. Vorzugsweise weist die Spanteinrichtung wenigstens zwei verschiedene Spante auf, deren Längsachsen sich schneiden.

Bevorzugt ist ferner, daß die Spanteinrichtung wenigstens zwei Spante aufweist, deren Längsachsen keinen Schnittpunkt aufweisen, und welche parallel oder nicht-parallel zueinander angeordnet sind.

Bevorzugt weist die Spanteinrichtung einen Spant bzw. einen Bereich auf, welcher eine y-förmige Querschnittsfläche aufweist. Gemäß einer bevorzugten Ausführungsform der Erfindung weist die Spanteinrichtung zwei, drei oder mehr Endbereiche auf, welche an einer Rohrinnenoberfläche des Fahrradrahmens anliegen. Gegebenenfalls ist eine oder mehrere dieser Endbereiche an der Rohrinnenoberfläche befestigt.

Vorzugsweise weist die Spanteinrichtung Abschnitte auf, welche zwischen zwei oder mehreren unterschiedlichen Endbereichen dieser Spanteinrichtung angeordnet sind und welche sich im wesentlichen frei durch den Rohrinnenraum des Rohrabschnitts erstrecken, in dem die Spanteinrichtung angeordnet ist, so daß die Spanteinrichtung in diesen Bereichen die Rohrinnenwandung nicht kontaktiert.

Gemäß einer bevorzugten Ausführungsform der Erfindung weist die Spanteinrichtung mehrere Spante auf, welche an Koppelstellen miteinander verbunden sind.

Die Spanteinrichtung ist ein- oder mehrstückig gestaltet.

Gemäß einer bevorzugten Ausführungsform der Erfindung ist wenigstens eine Spanteinrichtung in einem Oberrohr des Rahmens angeordnet, und zwar insbesondere in der Nähe des Steuerrohres.

Vorzugsweise ist wenigstens eine Spanteinrichtung im Sitzrohr eines Fahrradrahmens angeordnet.

Bevorzugt ist wenigstens eine Spanteinrichtung im Bereich oder in der Nähe eines Aufnahmebereichs zur Aufnahme eines Hinterbaus angeordnet, und zwar insbesondere am sogenannten oberen Lever.

Besonders bevorzugt weist eine im Bereich oder in der Nähe des Hinterbaus angeordnete Spanteinrichtung eine y-förmige Querschnittsfläche auf.

Wenigstens eine Spanteinrichtung ist bevorzugt im Bereich des Sitzrohres angeordnet, wobei innerhalb dieses Sitzrohres ein Rohr zur Aufnahme einer Sattelstange angeordnet ist, welches über ein oder mehrere Spante mit der Innenwandung des Sitzrohres verbunden ist. Gegebenenfalls stützt sich dieses Rohr an vorbestimmten Bereichen zusätzlich direkt an der Innenwandung des Sitzrohres ab.

Vorzugsweise ist wenigstens eine Spanteinrichtung derart gestaltet, daß von der Spanteinrichtung mehrere Kammern innerhalb des Rohrabschnitts gebildet werden, in welchem diese Spanteinrichtung angeordnet ist.

Unter Kammer ist im Sinne der vorliegenden Erfindung eine geschlossene oder eine zu einer oder mehreren Seiten offene Kammer zu verstehen.

Vorzugsweise ist die Spanteinrichtung derart gestaltet, daß eine Querschnittsfläche des Rohres, in welchem die Spanteinrichtung angeordnet ist, durch die Spanteinrichtung in zwei, drei, vier, fünf, sechs, sieben, acht, neun, zehn oder mehr unterschiedliche, von einander getrennte Bereiche unterteilt wird.

Vorzugsweise ist in wenigstens einem dieser Bereiche, oder in wenigstens einer der vorerwähnten Kammern, ein Körper, wie Schaumteil oder dergleichen angeordnet.

Eine erfindungsgemäße Spanteinrichtung weist vorzugsweise Vollmaterial auf und/oder hohle Bereiche.

Bevorzugt wird die Spanteinrichtung gemeinsam mit dem Rahmen gefertigt.

Besonders bevorzugt werden teilweise gefertigte Rahmenrohre oder in vollständig gefertigte Rahmenrohre Körper, wie Schaumteile, eingelegt, an deren Außenkontur zumindest teilweise Bereiche der Spanteinrichtung gelegt werden.

Bevorzugt wird die Spanteinrichtung oder Teile dieser Spanteinrichtung zwischen unterschiedlichen Körpern, wie Schaumteile, eingepreßt oder gegenüber der Innenwandung des Rohres, in welchem die Spanteinrichtung angeordnet wird, eingepreßt.

Gemäß einer bevorzugten Ausführungsform der Erfindung wird die Spanteinrichtung separat hergestellt und anschließend in den Fahrradrahmen bzw. in ein Rohr des Fahrradrahmens eingesetzt.

Fahrradrahmen und/oder dessen Rohrkonstruktion und/oder wenigstens ein Rohrabschnitt des Fahrradrahmens ist aus Metall, wie Stahl oder Leichtmetall, insbesondere Aluminium, oder aus einem Nicht-Metall, wie Kunststoff gefertigt.

Bevorzugt ist der Fahrradrahmen und/oder die Spanteinrichtung wenigstens teilweise aus einem faserverstärkten Kunststoff hergestellt.

Besonders bevorzugt ist die Spanteinrichtung und/oder wenigstens ein Teil des Fahrradrahmens aus Carbon hergestellt.

Vorzugsweise besteht die Spanteinrichtung aus einem Kunststoff oder aus Metall oder aus einem sonstigen Werkstoff.

Bevorzugt ist die Spanteinrichtung an die Rohrinnenwandung eines Rohrabschnitts des Fahrradrahmens laminiert.

Besonders bevorzugt ist eine Spanteinrichtung am oberen Lever, einem Verbindungselement zur Verbindung des Rahmens mit einem Hinterbau; gegeben bzw. eingesetzt.

Bevorzugt unterteilt eine nach der Erfindung verwendete Spanteinrichtung einen Abschnitt eines Rohrinnenraums oder einen Rohrinnenraum oder dessen Querschnittsfläche in unterschiedliche Bereiche bzw. Kammern, wobei ein Teil dieser Kammern oder Bereiche mit wenigstens einem Körper, wie Schaumteil, versehen ist und ein anderer Bereich bzw. oder eine andere Kammer keinen Körper, wie Schaumteil, aufweist.

Die Erfindung soll durch die beispielhaften und bevorzugten Ausführungsformen nicht beschränkt werden.

Im folgenden wird die Erfindung anhand der Figuren näher erläutert, wodurch die Erfindung nicht beschränkt werden soll.

Dabei zeigt:
- Fig. 1: eine beispielhafte Ausführungsform eines erfindungsgemäßen Fahrradrahmens;
- Fig. 2: eine Schnittdarstellung entlang der Linie 2-2 aus Fig. 1;
- Fig. 3: eine Schnittdarstellung entlang der Linie 3-3 aus Fig. 1; und
- Fig. 4: eine Schnittdarstellung entlang der Linie 4-4 aus Fig. 1.

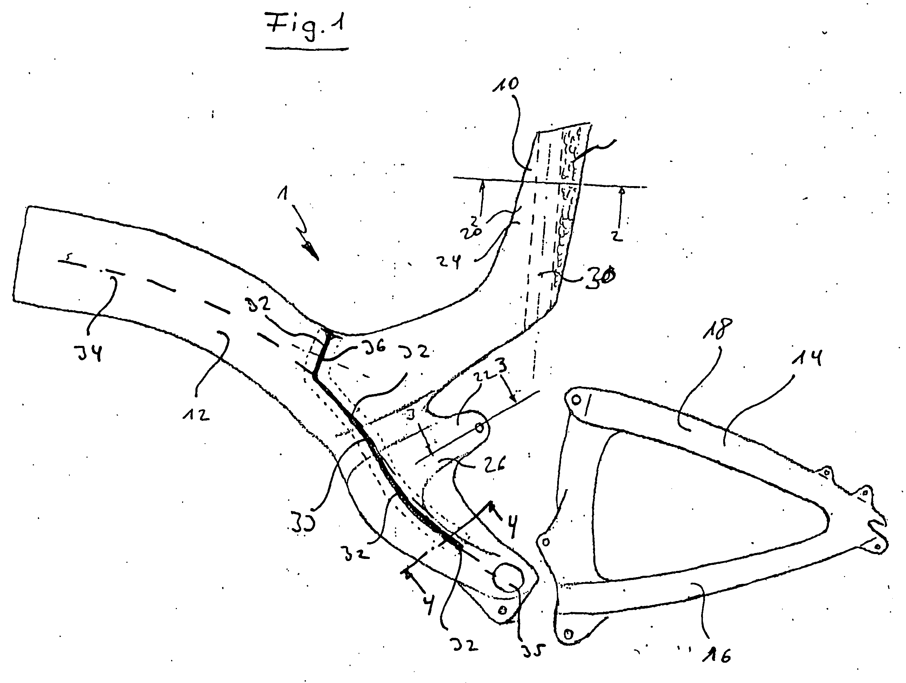

Fig. 1 zeigt einen beispielhaften erfindungsgemäßen Fahrradrahmen 1 in teilweiser Darstellung.

Insbesondere zeigt Fig. 1 ein Sitzrohr 10 eines Fahrradrahmens 1, welcher mit einem Oberrohr, zwischen den Enden des Oberrohres, verbunden ist.

Das Sitzrohr ist abgewinkelt und das Oberrohr 12 ist im wesentlichen geschwungen gestaltet.

Der Hinterbau 14 weist eine Kettenstrebe 16, sowie eine Sattelstrebe 18 auf.

Dieser Hinterbau 14 kann, was in Fig. 1 nicht gezeigt ist, an den verbleibenden Fahrradrahmen, und zwar insbesondere im Bereich oder in der Nähe des Oberrohres 12 oder der Tretlageraufnahme, angelenkt werden.

Der Fahrradrahmen weist ein oder mehrere Bereiche auf, in welchem ein Rohrabschnitt 20, 22 in seinem Rohrinnenraum 24, 26 eine Spanteinrichtung 28 aufweist.

Das Sitzrohr 10 weist ferner in seinem Rohrinnenraum 24 ein Rohr 30 auf, welches zur Aufnahme einer Sattelstange dient.

In der Ausführungsform gemäß Fig. 1 ist ferner eine Spanteinrichtung 32 vorgesehen, welche sich mit einem - in Längsrichtung gesehen - welche als im oberen Rohr 12 vorgesehenes Laminat gestaltet ist. Diese Spanteinrichtung 32 stützt sich, was in Fig. 1 nicht gezeigt ist, mit zwei senkrecht zur Längsrichtung der Spanteinrichtung 32 angeordneten Endbereichen an der Innenwandung des Oberrohrs 12 ab. Ein erster Teil 33 der Spanteinrichtung 32 verläuft im wesentlichen entlang der geschwungenen Längsachse 34 des Oberrohrs 12, und mündet in der Nähe einer am Oberrohr 12 angeordneten Hinterbauaufnahme 35.

Ein von dieser Hinterbauaufnahme 35 in Längsrichtung der Spanteinrichtung 32 abgewandtes Ende 36 schließt sich an den ersten Teil 33 der Spanteinrichtung abgewinkelt an und verläuft auf die Innenwandung des Oberrohrs 12 zu und stützt sich an dieser ab.

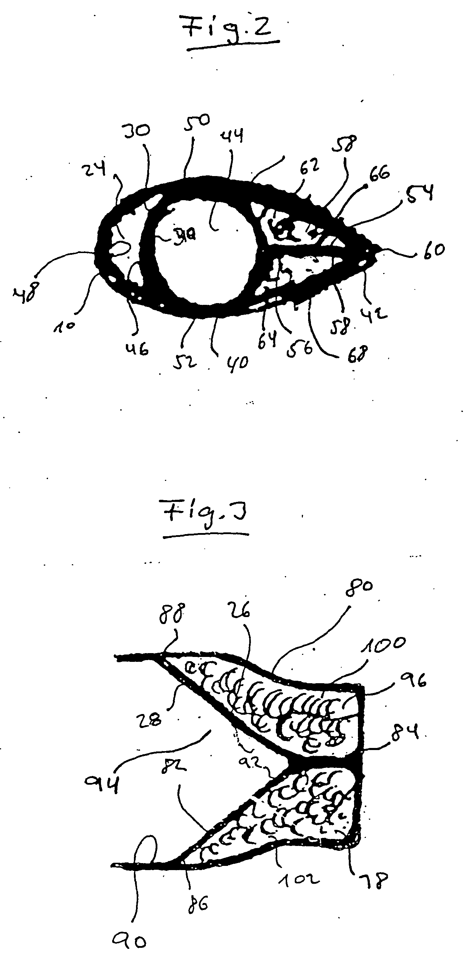

Fig. 2 zeigt eine Schnittansicht entlang der Linie 2-2 aus Fig. 1.

Die Wandung 40 des Sitzrohres ist in Querschnittsrichtung im wesentlichen elliptisch gestaltet und läuft in einem Ende 42 im wesentlichen spitz zu.

Im Rohrinnenraum 24 des Sitzrohres 10 ist ein Rohr 30 angeordnet, welches der Aufnahme einer nicht dargestellten Sattelstange in seinem inneren Bereich 44 dient. Der Außenmantel 46 des Rohres 30 stützt sich an der Wandung 48 des Sitzrohres 10 in unterschiedlichen Bereichen 50, 52 ab und ist hier gegebenenfalls befestigt.

Ein Spant 54 stützt sich mit seinem ersten Ende 56 an Außenmantel des Rohres 30 und mit seinem zweiten Ende 58 an der Innenwandung 48 des Sitzrohres 30 ab, und zwar insbesondere in dem Bereich 60, in welchem die Wandung 40 des Sitzrohres 10 spitz zuläuft. Durch den Spant 54 sowie das Rohr 30 und die Innenwandung 48 des Sitzrohres 10 werden unterschiedliche Bereiche bzw. Kammern 62, 64 im Rohrinnenraum bzw. in einer Querschnittsfläche dieses Rohrinnenraums 24 gebildet. In diesen Bereichen bzw. Kammern 62, 64 sind Schaumteile 66, 68 vorgesehen, welche insbesondere bei der Fertigung des erfindungsgemäßen Rahmens 1 mit Spanteinrichtung verwendet wurden.

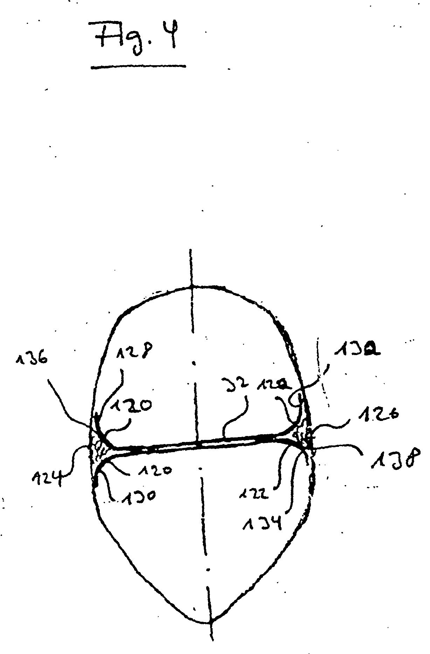

Fig. 3 zeigt eine Schnittansicht entlang der Linie 3-3 aus Fig. 1, und zwar insbesondere durch einen Aufnahmebereich 80 zur Aufnahme eines Hinterbaus 14.

Im Innenraum 26 ist eine Spanteinrichtung 28 angeordnet, welche eine y-förmige Querschnittsfläche mit unterschiedlichen Enden 84, 86, 88 aufweist, die sich jeweils an der Innenwandung 90 des Aufnahmebereichs 80 abstützen. Zwischen diesen Enden 84, 86, 88 der Spanteinrichtung 28 ist ein Bereich 92 vorgesehen, der sich im wesentlichen frei durch den Innenraum 94 des Aufnahmebereichs 80 erstreckt. Durch die Spanteinrichtung werden unterschiedliche Bereiche bzw. Kammern 96, 98 im Innenraum 94 des Aufnahmebereichs 80 bzw. in dessen Querschnittsfläche gebildet, welche durch die Spanteinrichtung 28 voneinander getrennt sind.

In diesen Kammern bzw. Bereichen 96, 98 sind Schaumteile 100, 102 angeordnet.

Fig. 4 zeigt eine Schnittdarstellung entlang der Linie 4-4 aus Fig. 1.

Diese Schnittdarstellung verdeutlicht eine beispielhafte Gestaltung einer im Oberrohr 12 angeordneten Spanteinrichtung 32.

Die Spanteinrichtung 32 stützt sich mit ihren beiden senkrecht zur Längsachse dieser Spanteinrichtung orientierten Endbereichen 120, 122 an gegenüberliegenden Bereichen 124, 126 der Innenwandung des Oberrohrs 12 ab und verläuft vorzugsweise zwischen diesen Endbereichen 124, 126 im wesentlichen senkrecht zur Oberfläche der Bereiche 124, 126 der Innenwandung des Oberrohrs 12.

Im Bereich dieser Endbereiche 120, 122 läuft die Spanteinrichtung 32 jeweils auseinander, so daß zwischen den auseinander laufenden Bereichen 128, 130 des Endbereichs 120 und einem ersten Bereich 124 der Innenwandung des Oberrohrs 12 bzw. zwischen den auseinander laufenden Endbereichen 132, 134 des Endbereichs 122 und dem zweiten Bereich 126 der Innenwandung des Oberrohrs 12 jeweils ein (kammerartiger) Hohlraum gebildet wird, der gegebenenfalls mit einem Füllstoff 136, 138 befüllt ist.

### Bezugszeichen

- 1: erfindungsgemäßer Fahrradrahmen
- 10: Sitzrohr
- 12: Oberrohr
- 14: Hinterbau
- 16: Kettenstrebe
- 18: Sattelstrebe
- 20: Rohrabschnitt von 1
- 22: Rohrabschnitt von 1
- 24: Rohrinnenraum
- 26: Rohrinnenraum
- 28: Spanteinrichtung
- 30: Rohr in 10
- 32: Spanteinrichtung
- 33: erster Teil von 32
- 34: Längsachse
- 35: Hinterbauaufnahme
- 36: Ende von 35
- 40: Wandung von 10
- 42: Ende von 40
- 44: innerer Bereich von 30
- 46: Außenmantel von 30
- 48: Innenwandung von 10
- 50: Bereich von 48
- 52: Bereich von 50
- 54: Spant
- 56: erstes Ende von 54
- 58: zweites Ende von 54
- 60: Bereich von 10
- 62: Kammer in 24
- 64: Kammer in 24
- 66: Schaumteil
- 68: Schaumteil
- 80: Aufnahmebereich
- 82: Querschnittsfläche von 28
- 84: Ende von 28
- 86: Ende von 28
- 88: Ende von 28
- 90: Innenwandung von 80
- 92: Bereich von 28
- 94: Innenraum von 80
- 96: Kammer bzw. Bereich
- 98: Kammer bzw. Bereich
- 100: Schaumteil
- 102: Schaumteil
- 120: Endbereich
- 122: Endbereich
- 124: Endbereich
- 126: Endbereich
- 128: Endbereich
- 130: Endbereich
- 132: Endbereich
- 134: Endbereich
- 136: Füllstoff
- 138: Füllstoff

## Patentansprüche

1. Fahrradrahmen, welcher zumindest teilweise als Rohrkonstruktion gestaltet ist und mehrere Rohrabschnitte mit Außenwandungsbereichen sowie mit einem Rohrinnenraum zugewandten Innenwandungsbereichen (48) aufweist,
wenigstens eines Rohrabschnitt (20; 22) in seinem Rohrinnenraum (24; 26) wenigstens eine Spanteinrichtung (28) aufweist, welche sich gegen die Rohrinnenwandung (48) dieses Rohrabschnitts (20; 22) abstützt
wobei eine Spannteinrichtung (32) im Oberrohr (12) angeordnet ist, die sich mit ihren beiden senkrecht zur Längsachse dieser Spanteinrichtung (32) orientierten Endbereichen (120, 122) an gegenüberliegenden Bereichen (124, 126) der Innenwandung des Oberrohrs (12) abstützt und zwischen diesen Endbereichen (124, 126) im wesentlichen senkrecht zur Oberfläche der Bereiche (124, 126) der Innenwandung des Oberrohrs (12) verläuft,
**dadurch gekennzeichnet, daß**
die Spanteinrichtung (32) im Bereich dieser Endbereiche (120, 122) jeweils auseinander läuft, so daß zwischen den auseinander laufenden Bereichen (128, 130) des Endbereichs (120) und einem ersten Bereich (124) der Innenwandung des Oberrohrs (12) bzw. zwischen den auseinander laufenden Endbereichen (132, 134) des Endbereichs (122) und dem zweiten Bereich (126) der Innenwandung des Oberrohrs (12) jeweils ein (kammerartiger) Hohlraum gebildet wird.

2. Fahrradrahmen nach Anspruch 1, **dadurch gekennzeichnet, daß** die Spanteinrichtung (28) mehrere, gegebenenfalls miteinander verbundene, Spante (54) aufweist.

3. Fahrradrahmen nach einem der vorangehenden Ansprüche, **dadurch gekennzeichnet, daß** unterschiedliche Spante (54) einer Spanteinrichtung (28) unter einem Winkel zu einander angeordnet sind.

4. Fahrradrahmen nach einem der vorangehenden Ansprüche, **dadurch gekennzeichnet, daß** die Spanteinrichtung (28) wenigstens zwei Spante (54) aufweist, deren Längsachsen sich schneiden.

5. Fahrradrahmen nach einem der vorangehenden Ansprüche, **dadurch gekennzeichnet, daß** die Spanteinrichtung (28) wenigstens zwei Spante (54) aufweist, deren Längsachsen keinen Schnittpunkt aufweisen.

6. Fahrradrahmen nach einem der vorangehenden Ansprüche, **dadurch gekennzeichnet, daß** wenigstens eine Spanteinrichtung (28) einen Spant (54) mit y-förmiger Querschnittsfläche (82) aufweist.

7. Fahrradrahmen nach einem der vorangehenden Ansprüche, **dadurch gekennzeichnet, daß** die Spanteinrichtung (28) wenigstens zwei Endbereiche (56; 58) aufweist, welche an Rohrinnenoberfläche (48) anliegen, insbesondere befestigt sind.

8. Fahrradrahmen nach einem der vorangehenden Ansprüche, **dadurch gekennzeichnet, daß** die Spanteinrichtung (28) Abschnitte aufweist, welche zwischen ihren Endbereichen (56; 58) einen Bereich (92) aufweisen, welcher sich im wesentlichen frei durch den Rohrinnenraum (24; 26) erstreckt.

9. Fahrradrahmen nach einem der vorangehenden Ansprüche, **dadurch gekennzeichnet, daß** die Spanteinrichtung (28) mehrere Spante (54) aufweist, welche an wenigstens einer Koppelstelle miteinander verbunden sind.

10. Fahrradrahmen nach einem der vorangehenden Ansprüche, **dadurch gekennzeichnet, daß** innerhalb des Sitzrohres (10) ein rohrförmiger Bereich (30) zur Aufnahme einer Sattelstange angeordnet ist und dieser rohrförmige Bereich über wenigstens einen Spant (54) mit einer Innenwandung (48) des Sitzrohres (10) verbunden ist.

11. Fahrradrahmen nach einem der vorangehenden Ansprüche, **dadurch gekennzeichnet, daß** wenigstens ein Aufnahmebereich (80) zur Aufnahme eines Hinterbaus (14) vorgesehen ist und im Bereich dieses Aufnahmebereichs (80) wenigstens eine Spanteinrichtung (28) im ' Rohrinnenraum (24; 26) vorgesehen ist.

12. Fahrradrahmen nach einem der vorangehenden Ansprüche, **dadurch gekennzeichnet, daß** im Rohrinnenraum (24; 26) wenigstens eine Kammer (62; 64; 96; 98) gegeben ist, an welche wenigstens eine Spanteinrichtung (28) grenzt.

13. Fahrradrahmen nach einem der vorangehenden Ansprüche, **dadurch gekennzeichnet, daß** in wenigstens einer Kammer (62; 64; 96; 98) ein Schaumteil (66; 68; 100; 102) angeordnet ist.

14. Fahrradrahmen nach einem der vorangehenden Ansprüche, **dadurch gekennzeichnet, daß** wenigstens eine Spanteinrichtung (28) innerhalb eines Rohrabschnitts (20; 22) eingepreßt ist.

15. Fahrradrahmen nach einem der vorangehenden Ansprüche, **dadurch gekennzeichnet, daß** dieser Fahrradrahmen (1) und gegebenenfalls die Spanteinrichtung (28) wenigstens teilweise aus faserverstärktem Kunststoff besteht.

16. Fahrradrahmen nach einem der vorangehenden Ansprüche, **dadurch gekennzeichnet, daß** zumindest ein Rohrbereich, in welchem eine Spanteinrichtung (28) angeordnet sind, und/oder diese Spanteinrichtung (28) wenigstens teilweise aus Carbon besteht.

17. Fahrradrahmen nach einem der vorangehenden Ansprüche, **dadurch gekennzeichnet, daß** wenigstens eine Spanteinrichtung (28) an eine Rohrinnenwandung (48) eines Rohrabschnitts (20; 22) laminiert ist.

18. Fahrradrahmen nach einem der vorangehenden Ansprüche, **dadurch gekennzeichnet, daß** wenigstens eine Spanteinrichtung (28) separat vom verbleibenden Rahmen hergestellt ist und in einen vorbestimmten Bereich dieses Rahmens eingesetzt ist.

19. Fahrradrahmen nach einem der vorangehenden Ansprüche, **dadurch gekennzeichnet, daß** wenigstens eine Spanteinrichtung (28) bei der Rahmenfertigung erzeugt worden ist.

20. Fahrradrahmen nach einem der vorangehenden Ansprüche, **dadurch gekennzeichnet, daß** bei der Rahmenfertigung in zumindest teilweise gefertigte Rahmenrohre Körper, wie Schaumteile (66; 68; 100; 102), eingelegt und an diese Körper und/oder an diese Rohre Spantteile zur Erzeugung von Spanteinrichtungen (28) angelegt werden.

## Claims

1. Bicycle frame, which is configured at least partially as a tube construction and comprises several tube sections with outer wall areas as well as inner wall areas (48) facing a tube inner space,
whereas at least one tube section (20; 22) comprises in its tube inner space at least one rib arrangement (28), which rests on the tube inner wall (48) of said tube section (20; 22),
whereas one rib arrangement (32) is arranged inside the top tube (12), said rib arrangement resting with its end regions (120; 122), which are oriented vertically to the longitudinal axis of said rib arrangement (32), on opposing regions (124, 126) of the inner wall of the top tube (12) and running substantially vertically to the surface of the regions (124, 126) of the inner wall of the top tube,
**characterized in that**
the rib arrangement (32) diverges in the region of said end regions (120, 122) respectively, such that between the diverging regions (128, 130) of the end region (120) and a first region (124) of the inner wall of the top tube (12) and between the diverging end regions (132, 134) of the end region (122) and the second region of the inner wall of the top tube (12) respectively a (cell-like) cavity is formed respectively.

2. Bicycle frame according to claim 1 **characterized in that** the rib arrangement (28) comprises several ribs (54), which are linked with each other, if applicable.

3. Bicycle frame according to one of the previous claims **characterized in that** different ribs (54) of a rib arrangement (28) are arranged with each other under an angle.

4. Bicycle frame according to one of the previous claims **characterized in that** the rib arrangement (28) comprises at least two ribs (54), whose longitudinal axes intersect.

5. Bicycle frame according to one of the previous claims **characterized in that** the rib arrangement (28) comprises at least two ribs (54), whose longitudinal axes do not intersect.

6. Bicycle frame according to one of the previous claims **characterized in that** at least one rib arrangement (28) comprises a rib with an Y-shaped cross-sectional area (82).

7. Bicycle frame according to one of the previous claims **characterized in that** the rib arrangement (28) comprises at least two end regions (56; 58), which lie against and particularly are connected to the tube inner surface (48).

8. Bicycle frame according to one of the previous claims **characterized in that** the rib arrangement (28) comprises sections, which comprise a region (92), which extends substantially free through the tube inner space (24; 26).

9. Bicycle frame according to one of the previous claims **characterized in that** the rib arrangement (28) comprises several ribs (54), which are connected to each other at one coupling site at least.

10. Bicycle frame according to one of the previous claims **characterized in that** a tube-shaped region (30) for the receipt of a seat post is arranged within the seat tube (10) and said tube-shaped region is connected to an inner wall (48) of the seat tube (10) via at least one rib (54).

11. Bicycle frame according to one of the previous claims **characterized in that** at least one reception area (80) for the receipt of a rear wheel structure (14) is provided and in the area of said reception area (80) at least one rib arrangement (28) is provided within the tube inner space (24; 26):

12. Bicycle frame according to one of the previous claims **characterized in that** in the tube inner space (24; 26) at least one cell (62; 64; 96; 98) is present, to which at least one rib arrangement (28) marches upon.

13. Bicycle frame according to one of the previous claims **characterized in that** a foamed member (66; 68; 100; 102) is arranged within at least one cell (62; 64; 96; 98).

14. Bicycle frame according to one of the previous claims **characterized in that** at least one rib arrangement (28) is pressed inside a tube section (20; 22).

15. Bicycle frame according to one of the previous claims **characterized in that** said bicycle frame (1) and, if applicable, the rib arrangement (28) are at least partially composed of fiber-reinforced plastics.

16. Bicycle frame according to one of the previous claims **characterized in that** at least one tube region, in which a rib arrangement (28) is arranged, and/or said rib arrangement (28) are at least partially composed of carbon.

17. Bicycle frame according to one of the previous claims **characterized in that** at least one rib arrangement (28) is laminated to a tube inner wall (48) of a tube section (20; 22).

18. Bicycle frame according to one of the previous claims **characterized in that** at least one rib arrangement (28) is manufactured separately from the residual frame and inserted into a predetermined region of said frame.

19. Bicycle frame according to one of the previous claims **characterized in that** at least one rib arrangement (28) was constituted on the fabrication of the frame.

20. Bicycle frame according to one of the previous claims **characterized in that** on the fabrication of the frame, parts like foamed members (66; 68; 100; 102) are inserted into frame tubes, which are fabricated at least in part, and rib members for the fabrication of rib arrangements (28) are applied to said parts and/or to said tubes.

## Revendications

1. Cadre de bicyclette, qui est au moins en partie réalisé sous forme de construction tubulaire, et présente plusieurs tronçons de tube avec des zones de paroi extérieure ainsi que des zones de paroi intérieure (48) dirigées vers un espace intérieur de tube,
au moins un tronçon de tube (20; 22) présentant, dans son espace intérieur de tube (24; 26), au moins un système de membrure (28) qui s'appuie sur la paroi intérieure de tube (48) de ce tronçon de tube (20; 22),
un système de membrure (32) étant agencé dans le tube horizontal (12), ce système de membrure s'appuyant, avec ses deux zones d'extrémité (120, 122) orientées perpendiculairement à l'axe longitudinal de ce système de membrure (32), sur des zones opposées (124, 126) de la paroi intérieure du tube horizontal (12), et s'étendant, entre ces zones d'extrémité (124, 126), sensiblement de manière perpendiculaire à la surface des zones (124, 126) de la paroi intérieure du tube horizontal (12),
**caractérisé en ce que** le système de membrure (32), dans la zone de chacune de ces zones d'extrémité (120, 122), s'évase en se subdivisant, de sorte qu'entre les zones évasées et subdivisées (128, 130) de la zone d'extrémité (120) et une première zone (124) de la paroi intérieure du tube horizontal (12), et respectivement entre les zones d'extrémité évasées et subdivisées (132, 134) de la zone d'extrémité (122) et la deuxième zone (126) de la paroi intérieure du tube horizontal (12), est formée respectivement une cavité (en forme de chambre).

2. Cadre de bicyclette selon la revendication 1, **caractérisé en ce que** le système de membrure (28) présente plusieurs membrures (54), le cas échéant reliées entre elles.

3. Cadre de bicyclette selon l'une des revendications précédentes, **caractérisé en ce que** différentes membrures (54) d'un système de membrure (28) sont agencées de manière à former un angle entre elles.

4. Cadre de bicyclette selon l'une des revendications précédentes, **caractérisé en ce que** le système de membrure (28) présente au moins deux membrures (54) dont les axes longitudinaux se coupent.

5. Cadre de bicyclette selon l'une des revendications précédentes, **caractérisé en ce que** le système de membrure (28) présente au moins deux membrures (54) dont les axes longitudinaux ne présentent pas de point d'intersection.

6. Cadre de bicyclette selon l'une des revendications précédentes, **caractérisé en ce qu'**au moins un système de membrure (28) présente une membrure (54) d'une surface de section transversale (82) en forme de Y.

7. Cadre de bicyclette selon l'une des revendications précédentes, **caractérisé en ce que** le système de membrure (28) présente au moins deux zones d'extrémité (56 ; 58) qui s'appuient sur une surface intérieure de tube (48), en y étant notamment fixées.

8. Cadre de bicyclette selon l'une des revendications précédentes, **caractérisé en ce que** le système de membrure (28) présente des tronçons qui comportent, entre leurs zones d'extrémité (56 ; 58), une zone (92) qui s'étend sensiblement de manière libre à travers l'espace intérieur de tube (24 ; 26).

9. Cadre de bicyclette selon l'une des revendications précédentes, **caractérisé en ce que** le système de membrure (28) présente plusieurs membrures (54) qui sont reliées les unes aux autres en au moins un endroit de couplage.

10. Cadre de bicyclette selon l'une des revendications précédentes, **caractérisé en ce qu'**à l'intérieur du tube de selle (10) est agencée une zone (30) en forme de tube destinée à recevoir une tige de selle, et cette zone en forme de tube étant reliée, par l'intermédiaire d'au moins une membrure (54), à la paroi intérieure (48) du tube de selle (10).

11. Cadre de bicyclette selon l'une des revendications précédentes, **caractérisé en ce qu'**il est prévu au moins une zone réception (80) pour recevoir un berceau arrière (14), et dans la zone de cette zone de réception (80) il est prévu au moins un système de membrure (28) dans l'espace intérieur de tube (24 ; 26).

12. Cadre de bicyclette selon l'une des revendications précédentes, **caractérisé en ce que** dans l'espace intérieur de tube (24 ; 26) est formée au moins une chambre (62 ; 64 ; 96 ; 98) à laquelle est adjacent au moins un système de membrure (28).

13. Cadre de bicyclette selon l'une des revendications précédentes, **caractérisé en ce que** dans au moins une chambre (62; 64; 96; 98) est disposée au moins une pièce en mousse (66; 68 ; 100 ; 102).

14. Cadre de bicyclette selon l'une des revendications précédentes, **caractérisé en ce qu'**au moins un système de membrure (28) est placé par compression à l'intérieur d'un tronçon de tube (20 ; 22).

15. Cadre de bicyclette selon l'une des revendications précédentes, **caractérisé en ce que** ce cadre de bicyclette (1) et, le cas échéant, le système de membrure (28) sont réalisés au moins en partie en un matériau synthétique renforcé de fibres.

16. Cadre de bicyclette selon l'une des revendications précédentes, **caractérisé en ce qu'**au moins une zone de tube, dans laquelle est agencé un système de membrure (28) et/ou ce système de membrure (28) sont réalisés au moins partiellement en carbone.

17. Cadre de bicyclette selon l'une des revendications précédentes, **caractérisé en ce qu'**au moins un système de membrure (28) est assemblé par laminage à une paroi intérieure de tube (48) d'un tronçon de tube (20 ; 22).

18. Cadre de bicyclette selon l'une des revendications précédentes, **caractérisé en ce qu'**au moins un système de membrure (28) est fabriqué séparément du restant du cadre, et est inséré dans une zone prédéterminée de ce cadre.

19. Cadre de bicyclette selon l'une des revendications précédentes, **caractérisé en ce qu'**au moins un système de membrure (28) a été engendré lors de la fabrication du cadre.

20. Cadre de bicyclette selon l'une des revendications précédentes, **caractérisé en ce que** lors de la fabrication du cadre, on place dans des tubes de cadre au moins partiellement fabriqués, des corps tels que des pièces de mousse (66 ; 68 ; 100 ; 102), et on applique sur ces corps et/ou ces tubes des pièces de membrure pour réaliser des systèmes de membrure (28).
